# EUROPEAN PATENT SPECIFICATION

(11) **EP 2 427 796 B1**
(45) Date of publication and mention of the grant of the patent: **25.11.2020**
(21) Application number: 10793707.0
(22) Date of filing: 26.05.2010
(51) Int. Cl.: G02B 27/44

(54) **OPTICAL APPARATUS AND METHOD**
OPTISCHE VORRICHTUNG UND VERFAHREN
APPAREIL OPTIQUE ET PROCÉDÉ ASSOCIÉ

(30) Priority: 30.06.2009 US 494719
(43) Date of publication of application: 14.03.2012
(60) Divisional application: 20190980.1
(73) Proprietor: Magic Leap, Inc., Plantation, FL 33322 (US)
(72) Inventor: LEVOLA, Tapani, FI-33270 Tampere (FI); SAARIKKO, Pasi, Tampere (FI)
(74) Representative: Swindell & Pearson Limited
(86) International application number: PCT/IB2010/052344
(87) International publication number: WO 2011/001306

(56) References cited:
- EP-A1- 0 535 402
- WO-A1-99/52002
- WO-A1-2008/014827
- WO-A1-2008/148927
- WO-A2-03/032017
- JP-A- 2007 012 530
- US-A- 5 854 872
- US-A- 6 124 977
- US-A1- 2001 010 598
- US-A1- 2002 063 913
- US-A1- 2004 042 377
- US-A1- 2004 246 391
- US-A1- 2006 228 073
- US-A1- 2007 159 673
- US-A1- 2008 316 768
- T. LEVOLA: 'Diffractive optics for virtual reality displays' JOURNAL OF THE SID 14 May 2006,

## Description

### FIELD

Embodiments of the present invention relate to an optical apparatus and method. In particular, they relate to expanding and directing light to enable a user to view an image on a virtual display.

### BACKGROUND

A portable electronic device may include a display that enables a user to view content, such as images or video. The display may be situated on a face of the device. Typically, the size of the display is restricted by a need to keep the size of the portable device relatively small.

US2007/159673 (D1) discloses a display system including an image guiding substrate with input and/or output structures configured to improve image quality.

US2001/010598 (D2) discloses a head mount type display device. According to D2 the head mount type display device includes an optical system having a light emitting element, a display element illuminated by the light emitting element, and an image forming element for producing an image. In D2, the display element is arranged between the image forming element and the first focal point of the image forming element at a position nearer to the first focal point of the image forming element. According to D2, a virtual image of the display element is formed by the image forming element and the light emitted by the light emitting element is focussed on a second focal point of the image forming element. According to D2, it is designed such that the eye of an observer is located on the second focal point when use. In another form of D2, the optical system includes first and second elliptical concave mirrors with respective ones of focal points arranged at a common position.

US6124977 (D3) discloses an image display apparatus. According to D3 the image display apparatus uses a modified prism as an ocular optical system, in which unwanted light caused by reflection or transmission at an area outside the effective area of a reflecting or transmitting surface is reduced to provide a favorable image of high resolution, which is free from flare or ghost. In D3, the prism member, which is used as an ocular optical system, includes a first surface having an action through which a light beam enters the prism member, a second surface having an action by which the light beam is reflected in the prism member, and a third surface having an action through which the light beam exits from the prism member. According to D3, a black coating, which is an antireflection member having a flare- or ghost-preventing action, is provided over a part of a non-effective reflecting area of at least the second surface, exclusive of an effective reflecting area (an area reflecting an effective light beam that forms the virtual image).

US2006/228073 (D4) discloses an optical device and virtual image display device. According to D4 a virtual image display device is provided which displays a two-dimensional image for viewing a virtual image in a magnified form by a virtual optical system. In D4, the virtual image display device includes an optical waveguide to guide, by internal total reflection, parallel pencil groups meeting a condition of internal total reflection, a first reflection volume hologram grating to diffract and reflect the parallel pencil groups incident upon the optical waveguide from outside and traveling in different directions as they are so as to meet the condition of internal total reflection inside the optical waveguide and a second reflection volume hologram grating; to project the parallel pencil groups guided by internal total reflection inside the optical waveguide as they are from the optical waveguide by diffraction and reflection thereof so as to depart from the condition of internal total reflection inside the optical waveguide. According to D4, some of the parallel pencil groups guided through the optical waveguide being totally reflected different numbers of times for a period from external incidence upon the optical waveguide until outgoing from the optical waveguide.

WO2008/148927 (D5) discloses a diffractive beam expander and a virtual display based on a diffractive beam expander. According to D5 the diffractive beam expander comprises a substantially planar waveguiding substrate, an input grating to provide an in-coupled beam propagating within said substrate, and an output grating to provide an out-coupled beam. In D5, the expander comprises also four or more further grating portions to expand the height of the in-coupled beam. According to D5, a part of the in-coupled light is diffracted by a first deflecting grating portion to provide a first deflected beam. A part of the in-coupled light is diffracted by a second deflecting grating portion to provide a second deflected beam. In D5, the first deflected beam propagates downwards and the second deflected beam propagates upwards with respect to the in-coupled beam. According to D5, the first deflected beam impinges on a first direction-restoring grating portion and the second deflected beam impinges on a second direction-restoring grating portion. The first restoring grating portion provides a first restored beam and the second restoring grating portion provides a second restored beam, which both have the same direction as the in-coupled beam. According to D5, out-coupling provides an output beam which is parallel to the input beam, and has a greater vertical dimension than said input beam.

US2008/316768 (D6) discloses a light guide with input and output faces is polar-symmetric about the first face and has optical properties such that the angle at which a ray is injected into the first face determines the position at which it leaves the second face, or, if operated in the reverse direction, the position at which the ray enters the second face determines the angle at which the ray leaves the second face. According to D6, the light guide includes a tapered transparent sheet, light from the first face entering at the thick end of this sheet, and the second face forming one face of the tapered sheet. In D6, an input/output slab adjoins the tapered sheet for fan-out of light from the first face to the tapered sheet, and a transition region is located between flat and tapered sheets. According to D6, the polar symmetry means that light rays always travel in line with the taper direction, which suppresses banding. According to D6, preferably the light guide further includes a prism device for folding the light so that the flat and tapered sheets can be folded over each other. A method of making such a prism is also disclosed.

US5854872 (D7) discloses an assembly for frontlighting or backlighting a display or other such arrangement requiring frontlighting or backlighting. According to D7, the assembly uses a light pipe with a set of specially configured microprisms to rotate the divergent angle of light. In D7, the divergent angle rotator is used with a flat collimator assembly for efficient display illuminating with light of a controllable degree of collimation in both dimensions.

US2004/042377 (D8) discloses an integrated optical head. According to D8, in the integrated optical head, a light source emits light. A waveguide guides the light. An input coupler is located at one edge of the waveguide, and couples light emitted from the light source and transmits the coupled light to the waveguide. An output coupler is located at another edge of the waveguide, and couples light emitted from the waveguide and focuses the coupled light on an optical disc. In D8, a light path changing unit is installed on the waveguide, and changes the light path of light that has been reflected by the optical disc and then passed through the output coupler. According to D8, an optical detector receives the light passed through the light path changing unit and converts the received light into an electrical signal in order to detect information from the optical disc. According to D8 an input coupling efficiency and an output coupling efficiency are improved, such that light loss is reduced. Thus, according to D8 recording and reproduction of an optical head can be improved, and a light, compact, integrated optical head can be obtained.

JP2007012530 (D9) discloses an optical instrument for illumination and virtual image display device. According to D9, the instrument is composed of a light source, a light pipe, and a diffusion plate. In D9, light flux irradiated from the light source enters inside from an incident face of the light pipe, and so structured that, after at least a part of the light flux is totally reflected internally at the side face of the light pipe, the part of the flux is ejected from an irradiation face with a larger area than the incident face, and then, diffused by the diffusion plate arrayed in succession to light an irradiated object, for instance, a space light modulation part.

US2002/063913 (D10) discloses an observation optical system comprising an image display element and an eyepiece optical system which introduces an image formed by the image display element to a center of an eye of an observer without forming an intermediate image, so as to allow the observer to observe the image as a virtual image. According to D10, the eyepiece optical system is constructed and arranged to bend the optical axis using reflecting surfaces so as to be compact. In D10, the optical axis lies in a plane, with respect to which the optical system is formed symmetric. According to D10, the optical system includes a prism 3 having an entrance surface, a plurality of curved reflecting surfaces and an exit surface. In D10, the reflecting surface is provided with a volume hologram (HOE). Whereby, according to D10, it is possible to provide an image observation optical system which can be made compact enough to be usable as an image display unit for a cellular phone or a portable intelligent terminal, and which can achieve high image definition and wide field angle while controlling chromatic aberration of magnification to be small.

US2004/246391 (D11) discloses a flat-panel projection display comprising a slab waveguide having an embossed diffraction grating on one face, a lens for directing light into an edge of the waveguide, and in the focal plane of the lens a liquid-crystal modulator for modulating the intensity of the light as a function of lateral position and elevational direction of travel.

According to D11, the light is ejected from the slab waveguide by the grating at angles corresponding to the input angles, giving a virtual display.

In D11, the light from the modulator can be expanded in one dimension by passing through a magnifying waveguide, followed by scattering in the plane by a screen and projection by a lens at the other end of the waveguide.

According to D11, head-up and 3-D displays can be constructed using this principle.

### BRIEF DESCRIPTION OF VARIOUS EXEMPLARY EMBODIMENTS OF THE INVENTION

According to the invention there is provided an apparatus and method as set out in the appended independent claims.

Advantageous embodiments are defined in the appended dependent claims.

### BRIEF DESCRIPTION OF THE DRAWINGS

For a better understanding of various examples of embodiments of the present invention reference will now be made by way of example only to the accompanying drawings in which:
Fig. 1 illustrates an overhead view of optical apparatus;
Fig. 2A illustrates an overhead view of a light expander;
Fig. 2B illustrates a perspective view of the light expander;
Fig. 2C illustrates a portion of a light beam being expanded in the light expander;
Fig. 3 illustrates a side view of the optical apparatus;
Fig. 4 illustrates a perspective view of an optical device;
Fig. 5A illustrates an overhead view of the optical device;
Fig. 5B illustrates a side view of the optical device;
Fig. 5C illustrates a portion of a side view of the optical device;
Fig. 6A illustrates a perspective view of an exit pupil expander;
Fig. 6B illustrates a cross-section of the exit pupil expander;
Fig. 7 illustrates a perspective view of a user viewing a virtual display through an exit pupil expander;
Fig. 8 illustrates a side view of the user viewing the virtual display through the exit pupil expander; and
Fig. 9 illustrates a method.

### DETAILED DESCRIPTION OF VARIOUS EXEMPLARY EMBODIMENTS OF THE INVENTION

The description and the figures relate to an apparatus 2, comprising: a light expander 30 configured to expand light, input into the light expander, in a first dimension, and configured to provide diverging light that diverges in the first dimension; and an optical device 50 configured to redirect diverging light, received from the light expander 30, to produce converging light that converges in the first dimension.

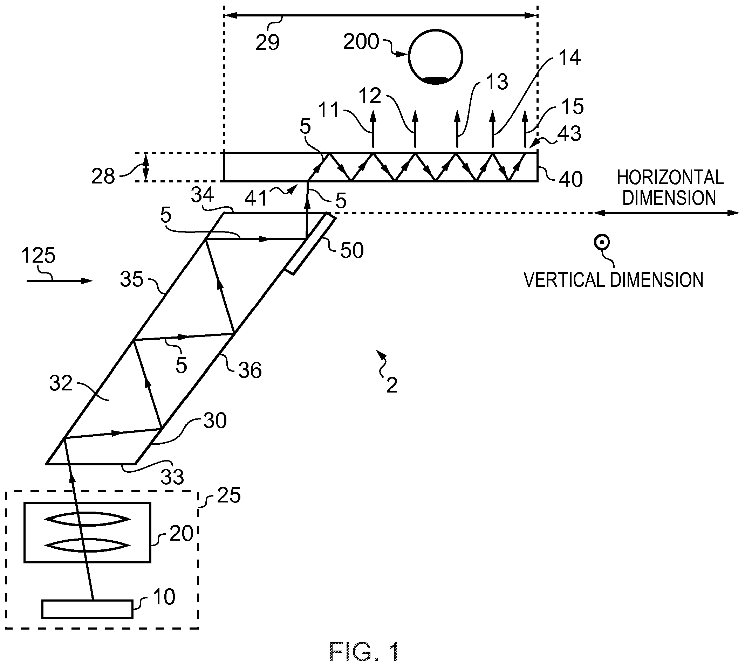

Fig. 1 illustrates an overhead view of an exemplary optical apparatus 2. In this example, the optical apparatus 2 comprises an optical engine 25, a first light expander 30, an optical device 50 and a second light expander 40.

The optical engine 25 illustrated in Fig. 1 comprises a display 10 and one or more optical devices 20. The display 10 may be any suitable display device and may, for example, be a micro-display. The display 10 may comprise a plurality of pixels. If the display 10 is a micro-display, it may comprise pixels at more than fifty lines per millimeter. The display 10 may, for example, be emissive, transmissive, reflective or transflective. The one or more optical devices 20 may be any suitable optical devices. For example, the one or more optical devices 20 may be one or more lenses.

Divergent light may emanate from each pixel on the display 10. In this example, at least a portion of the divergent light emanating from a pixel is collimated by the one or more optical devices 20 and output from the optical engine 25 as a collimated light beam. The optical engine 25 may, for instance, output a light beam for each and every one of the pixels of the display 10. Each light beam may have a diameter that is substantially equal to the exit aperture of the optical engine 25.

Each one of the light beams output by the optical engine 25 can be considered to comprise a bundle of light rays. The light rays within a particular light beam are substantially parallel to one another.

In this example, the light beams output by the optical engine 25 diverge from one another. That is, the light rays from one light beam diverge from the light rays from another light beam.

The diverging light beams output by the optical engine 25 can be considered to form a continuum of diverging light. The continuum of diverging light exiting the optical engine 25 enters the light expander 30 through an entrance face 33 of the light expander 30.

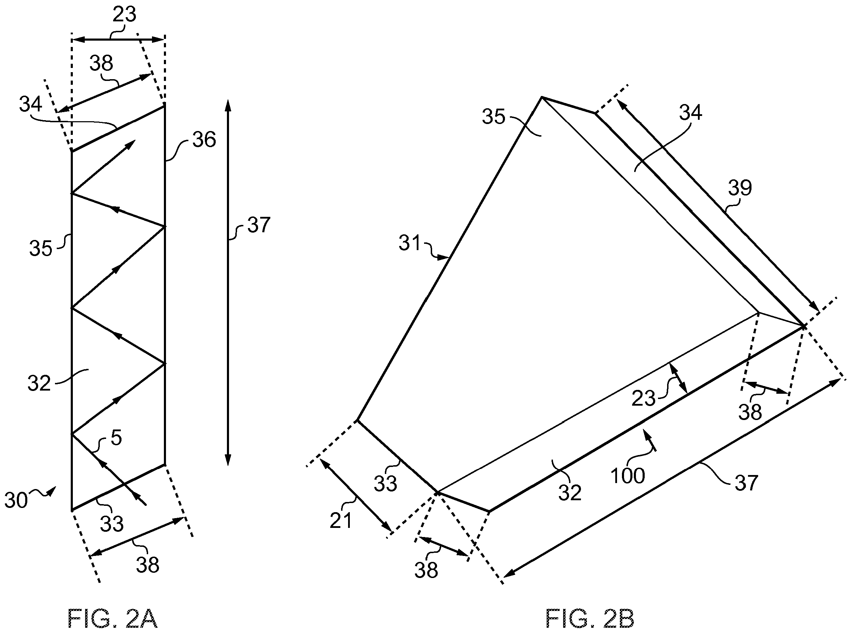

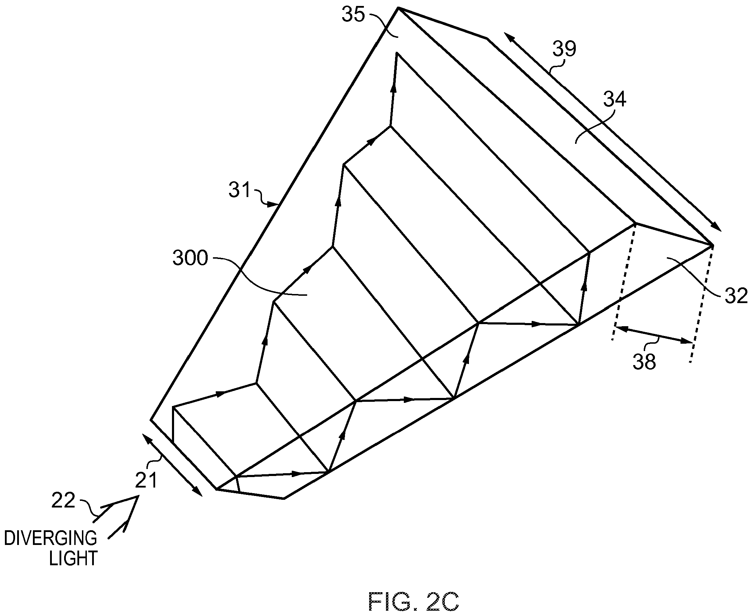

The light expander 30 is illustrated in Figs 2A, 2B and 2C. Fig. 2A is an overhead view of the light expander 30 and Figs 2B and 2C are perspective views of the light expander 30. The arrow 100 in Fig. 2B illustrates the viewpoint illustrated in Fig. 2A.

The light expander 30 illustrated in Figs 2A, 2B and 2C comprises an entrance face 33, an end face 34, an upper face 32, a lower face 31 and first and second side faces 35, 36. In this example, the length 21 of the entrance face 33 is smaller than the length 39 of the end face 33. The widths 38 of the entrance face 33 and the end face 34 are substantially the same.

In this example, the entrance face 33 and the end face 34 are substantially parallel with one another and the first and second side faces 35, 36 are substantially parallel with one another. The lower face 31 and the upper face 32 may or may not be substantially parallel with one another.

As the lower face 31 and the upper face 32 extend from the entrance face 33 towards the end face 34, they diverge from one another. In this example, the lengths 37 of the upper and lower faces 31, 32 are substantially the same and the widths 23 of the upper and lower faces 31, 32 are substantially the same.

The diverging light continuum output by the optical engine 25 enters the light expander 30 via the entrance face 33. The light continuum may, for example, undergo total internal reflection within the light expander 30. In this example, total internal reflection of the light beam occurs at the interface between the first side face 35 and air, and at the interface between the second side face 36 and air. Figs 1 and 2A illustrate a light ray 5 from the light continuum being reflected inside the light expander 30, to show schematically how the light continuum is reflected.

In some alternative embodiments of the invention, the light continuum does not undergo total internal reflection inside the light expander 30. In these embodiments, the internal surfaces of the light expander 30 may be coated with a reflective material.

Figure 2C illustrates an arrow 22 showing the direction in which the diverging light continuum, output by the optical engine 25, is input into the light expander 30. As the diverging light continuum is guided from the entrance face 33 towards the end face 34 of the light expander 30, the diverging upper and lower faces 32, 31 enable the diverging light continuum within the light expander 30 to expand, prior to the diverging light continuum exiting the light expander 30. Figure 2C schematically illustrates a portion 300 of the diverging light continuum reflecting and expanding within the light expander 30. The diverging light continuum expands in a vertical dimension that is aligned with the lengths 21, 39 of the entrance and end faces 33, 34.

The light expander 30 is configured to output a diverging light continuum that has been vertically expanded relative to the light continuum that entered the light expander 30. The light expander 30 may cause little or no expansion of the light continuum in a horizontal dimension 38 that is substantially orthogonal to the vertical dimension 39. In Fig. 1, the vertical dimension is into and out of the page and the horizontal dimension is across the page.

In this example, the widths 38 of the entrance face 33 and the end face 34 are the substantially the same and the widths 23 of the upper and lower faces 32, 31, which extend between the entrance and end faces 33, 34, remain constant for the majority of the length of the upper and lower faces 32, 31. This prevents the light beam from expanding in a horizontal dimension aligned with the width 38 of entrance and end faces 33, 34.

After expanding the diverging light continuum, the light expander 30 provides the diverging light continuum to the optical device 50, which is positioned at a side face 36 of the light expander 30.

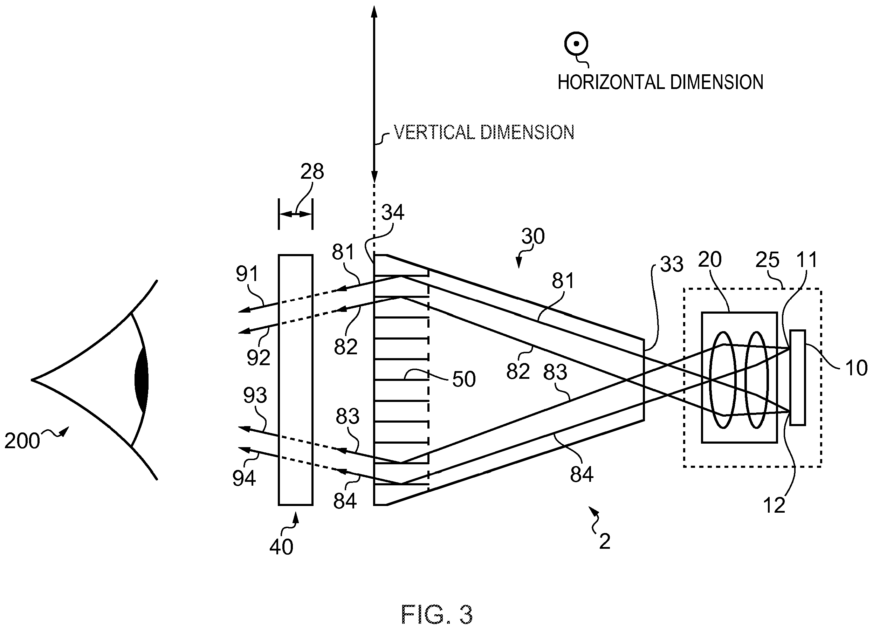

Fig. 3 illustrates how light rays from particular light beams of the light continuum travel through the light expander 30. Fig. 3 is a side view of the optical apparatus 2 illustrated in Fig. 1. The viewpoint illustrated in Fig. 3 is indicated by the arrow 125 shown in Fig. 1.

In Fig. 3, first and second light rays 81, 82 emanate from a first, lower, pixel 12 of the display 10 and third and fourth light rays 83, 84 emanate from a second, upper, pixel 11 of the display 10.

The first and second light rays 81, 82 can be considered to be part of a number of parallel light rays emanating from the first pixel 12 that form a first light beam. The third and fourth light rays 83, 84 can be considered to be part of a number of parallel light rays emanating from the second pixel 11 that form a first second light beam. The first light beam and the second light beam are portions of the continuum of light. As described above in relation to Fig. 1, each light beam has a diameter corresponding to the exit aperture of the optical engine.

The first and second light rays 81, 82 from the first light beam are parallel to one another as they travel out of the optical engine 25 and through the light expander 30. The first and second light rays 81, 82 (and the first light beam of which the light rays 81, 82 are a part) move upwards as they travel through the light expander 30. Fig. 3 schematically illustrates the first and second light rays 81, 82 being redirected by the optical device 50 before being output from an upper part of the end face 34 of the light expander 30.

The third and fourth light rays 83, 84 from the second light beam are parallel to one another as they travel out of the optical engine 25 and through the light expander 30. The third and fourth light rays 83, 84 (and the second light beam of which the light rays 83, 84 are a part) move downwards as they travel through the light expander 30. Fig. 3 schematically illustrates the third and fourth light rays 83, 84 being redirected by the optical device 50 before being output from a lower part of the end face 34 of the light expander 30.

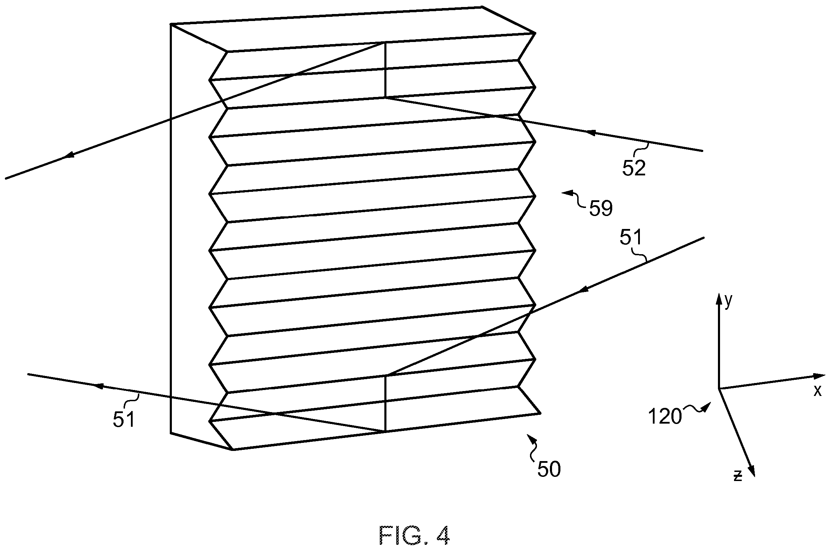

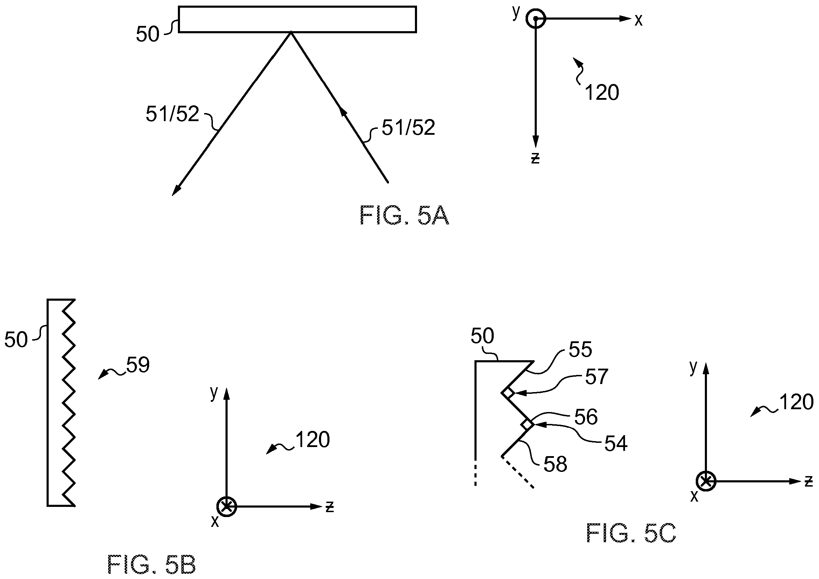

Figs 4 and 5A to 5C illustrate the optical device 50. In this example, the optical device 50 is a grooved reflector that provides a reflective system. Fig. 4 illustrates a perspective view of the optical device 50. Fig. 5A illustrates an overhead view of the optical device 50 and Figs 5B and 5C illustrate side views of the optical device 50. Fig. 3 illustrates an overhead view of the optical device 50 that is similar to that shown in Fig. 5A.

The relative orientation of the optical device 50 in each of the figures is indicated by the x, y and z axes 120 in the figures. The y-axis illustrated in Fig 4 and Figs 5A and 5C may, in this example, be considered to be substantially aligned with the vertical dimension mentioned above in relation to the expansion of light performed by the light expander 30 (and indicated in Figs 1 and 3).

The reflective system provided by the optical device 50 comprises a plurality of reflective surfaces 59. Adjacent reflective surfaces of the reflective system are substantially orthogonal to one another and provide alternating protrusions and recesses.

For example, Fig. 5C illustrates a first surface 55 that slopes inwardly and downwardly. An end of first surface 55 meets the beginning of a second surface 56 which slopes outwardly and downwardly. The first surface 55 and the second surface 56 are substantially orthogonal to one another and define a recess 57. The end of the second surface 56 meets the beginning of a third surface 58. The third surface 58 slopes inwardly and downwardly. The second surface 56 and the third surface 58 are substantially orthogonal to one another and define a protrusion.

The optical device 50 is configured to redirect the light continuum (and the light beams that make up the light continuum) that is incident upon it. Fig 4 illustrates light rays 51, 52 from the light continuum being redirected in more detail than Fig. 3. In Fig. 4, each of the light rays 51, 52 reflect against a first reflective surface of the optical device 50 before reflecting against a second, adjacent reflective surface and being redirected away from the optical device 50.

When the diverging light continuum, provided by the light expander 30, is incident upon the optical device 50, the optical device 50 changes the direction of the light continuum in the vertical dimension (y) to produce a converging light continuum. This is illustrated schematically in Fig. 4, which illustrates the y-component of incident light rays 51, 52 being inverted by the optical device 50.

The optical device 50 is also configured to change the direction of an incident light continuum within a plane that is orthogonal to the vertical dimension. It can be seen from Fig. 5A that the light rays 51, 52 are redirected within a plane that is defined by the x and z axes, and orthogonal to the y-axis.

The optical device 50 redirects a diverging light continuum, received from the light expander 30, to produce a converging light continuum that converges in the vertical dimension (y). This can be seen schematically in Fig. 3, which illustrates light rays 81, 82, 83, 84 from the light continuum being redirected to produce converging light.

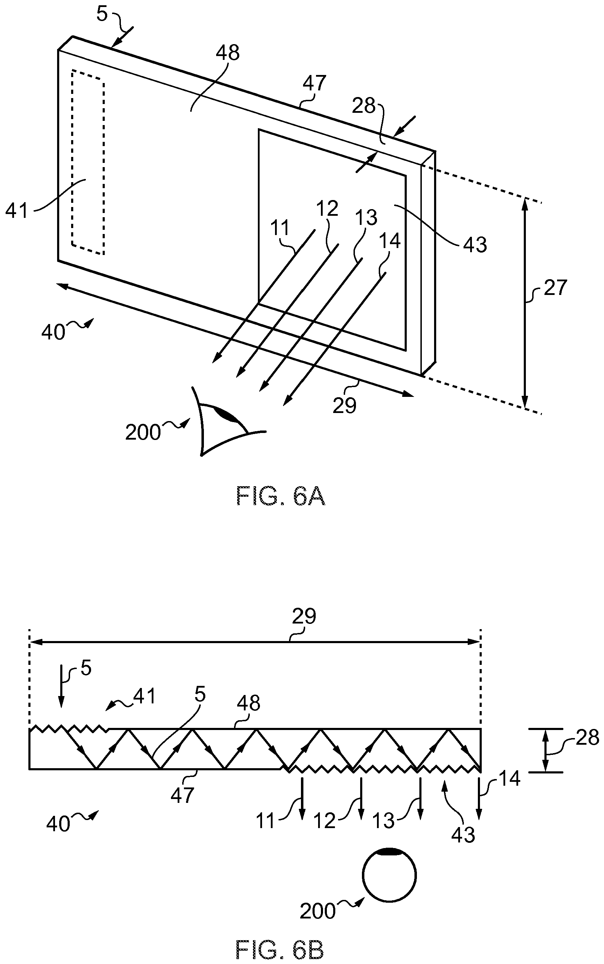

The converging light continuum output by the optical device 50 travels through the light expander 30, out of the end face 34 of the light expander 30 and towards the second light expander 40. In this example, the second light expander is an exit pupil expander 40. The exit pupil expander 40 is illustrated in Figs 6A and 6B.

Fig. 6A is a perspective view of the exit pupil expander 40 and Fig. 6B illustrates a cross section of the exit pupil expander 40. The exit pupil expander 40 has a length 29, a width 27 and a depth 28.

The exit pupil expander 40 illustrated in Figs 6A and 6B comprises an in-coupling portion 41 and an out-coupling portion 43. In this example, the first out-coupling portion 41 is a first diffraction grating and the out-coupling portion 43 is a second diffraction grating. In other examples, the in-coupling portion 41 and/or the out-coupling portion 43 may be provided by refractive and/or reflective optics.

In the exemplary exit pupil expander 40 illustrated in Figs 6A and 6B, the first diffraction grating 41 is situated on a rear face 47 of the exit pupil expander 40 and the second diffraction grating 43 is situated on a front face 48 of the exit pupil expander 40.

The light continuum enters the exit pupil expander 40 via the first diffraction grating 41. After entry into the exit pupil expander 40, the light beam undergoes total internal reflection inside the exit pupil expander 40. The light continuum is guided along the length 29 of the exit pupil expander 40 before leaving via the second diffraction grating 43. When light from the light continuum is incident upon the second diffraction grating 43 from within the exit pupil expander 40, a portion of the light leaves the exit pupil expander 40 via the second diffraction grating 43 and the remainder of the light is reflected from the second diffraction grating 43, inside the exit pupil expander 40.

The light continuum may be reflected by the second diffraction grating 43 a number of times in succession. This results in the light continuum leaving the exit pupil expander 43 effectively being a horizontally expanded version of the light continuum originally incident upon the first diffraction grating 41. In this example, the direction of expansion is aligned with the length 29 of the exit pupil expander 29.

Fig 6B schematically illustrates a light ray 5 from the light continuum entering the exit pupil expander 40 and being reflected inside the exit pupil expander 40. The light rays 11-14 schematically illustrate a horizontally expanded light continuum exiting the exit pupil expander 40.

The exit pupil expander 40 may be configured not to expand the light beam output by the optical device 50 in the vertical dimension (substantially aligned with the width 27 of the exit pupil expander 40).

The exit pupil expander 40 may be configured to expand the light continuum that is incident upon it by the same magnitude as the expansion of the light continuum that results from the functions performed by the light expander 30 and the optical device 50.

The light expander 30 can be considered to expand the exit pupil of the optical apparatus 2 vertically. The exit pupil expander 40 can be considered to expand the exit pupil of the optical apparatus 2 horizontally. The horizontal and vertical extent of the exit pupil of the optical apparatus 2 may, for example, be larger than the diameter of the entrance pupil of the eye.

Fig. 3 illustrates a side view of the exit pupil expander 40. Fig. 3 schematically illustrates a converging light continuum (represented, in this case, by the light rays 81-84) being input into the exit pupil expander 40 via the first diffraction grating 41 of the exit pupil expander 40.

The converging light continuum beam represented by the light rays 81-84 has been expanded in a vertical sense (as compared to the state of the light continuum when it is output by the optical engine 25). In this example, the converging light continuum represented by the light rays 81-84 has not been expanded in a horizontal sense (as compared to the state of the light continuum when it is output by the optical engine 25).

The angle at which a light ray enters the first diffraction grating 41 of the exit pupil expander 40 is the same angle at which that light ray exits the exit pupil expander 40 at the second diffraction grating 43. This means that inputting a converging, expanded light continuum into the exit pupil expander 40 results in a converging, expanded light continuum being output by the exit pupil expander 40.

In this particular example, the light continuum that is input into the exit pupil expander 40 converges in the vertical dimension (as illustrated in Fig. 3) but not in the horizontal dimension. The light continuum that is output by the exit pupil expander 40 also converges in the vertical dimension (as illustrated in Fig. 3) but not in the horizontal dimension (as illustrated in Figs 1, 6A and 6B, for example).

Fig. 3 schematically illustrates converging light rays 91-94, which are part of the converging light continuum that is output by the second diffraction grating 43 of the exit pupil expander 40 and which may be used by a user 200 to view an image on a virtual display. The converging light continuum represented by the light rays 91-94 has been expanded in a vertical sense and in a horizontal sense (as compared to the state of the light continuum when it is output by the optical engine 25).

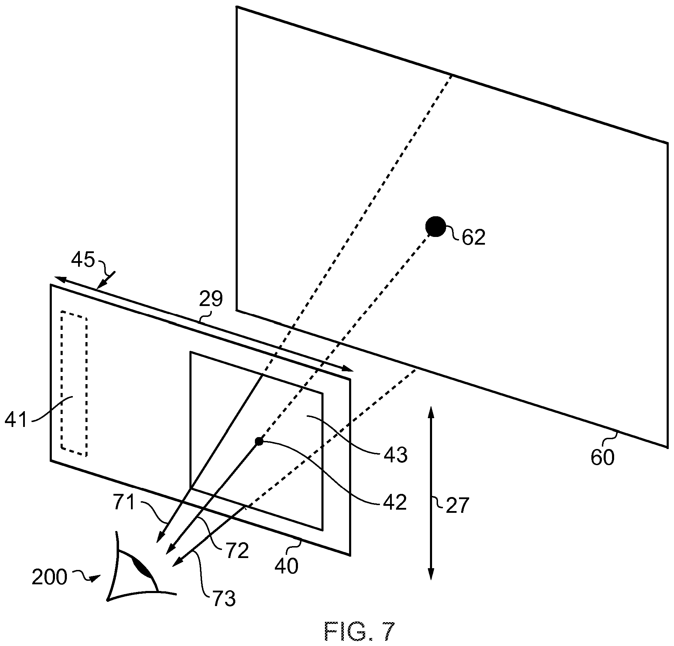

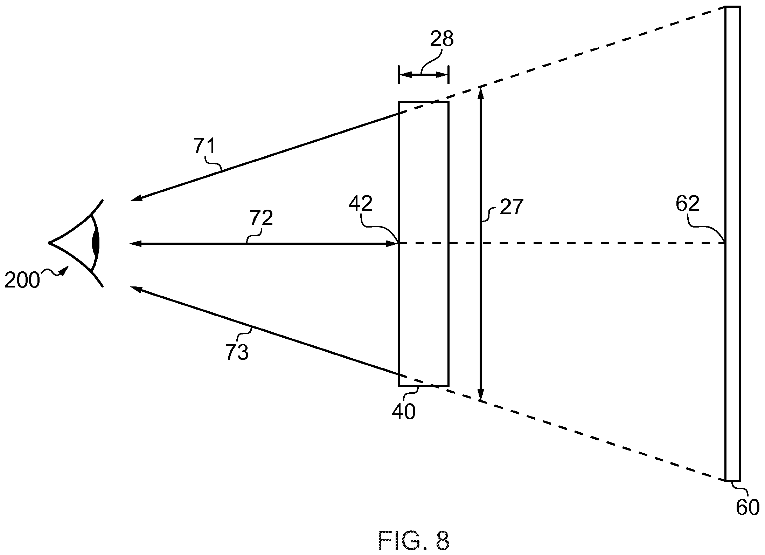

The exit pupil expander 40 provides an exit pupil for the optical apparatus 2 that enables a user to view an enlarged version of an image displayed on the display 10. Fig. 7 illustrates a perspective view of a user 200 viewing an enlarged image on a virtual display 60. Fig. 8 illustrates a side view of the user 200 viewing the expanded image on the virtual display 60.

In Figs 7 and 8, the gaze point 42 of the user is at the center of the exit pupil expander 40. When gazing at the central gaze point 42, the user 200 may see the whole of the virtual display 60 (the whole of the image displayed on the display 10). The gaze point on the virtual display has been assigned reference numeral 62 in Figs 7 and 8.

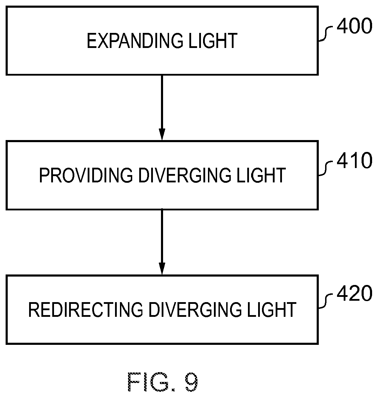

At the user's viewing position, the light rays exiting the exit pupil expander 40 converge on the user's eye. Light rays exiting an upper portion of the second diffraction grating 43, such as light ray 71, travel downwardly towards the user's eye. Light rays exiting a lower portion of the second diffraction grating 43, such as light ray 73, travel upwardly towards the user's eye. In Figs 8 and 9, the light rays 71, 72 and 73 have been extrapolated to illustrate how they relate to the virtual display 60.

In the exemplary embodiments of the invention described above, light is expanded in vertical and horizontal dimensions by light expanders 30, 40, enabling a user to view an image on a virtual display 60 comfortably. Many of the light rays exiting the optical apparatus 2 are used by the user to view the virtual display 60, because the light beam exiting the exit pupil expander 40 converges towards the user's eye(s).

Relatively few light rays exit the exit pupil expander 40 without being used by the user to view the virtual display 60. For example, in embodiments of the invention, relatively few light rays are directed upwardly from the upper portion of the exit pupil expander 40 (and away from the eye). Similarly, relatively few light rays are directly downwardly from the lower portion of the exit pupil expander 40 (and away from the eye).

Since relatively little light is wasted, embodiments of the invention advantageously enable power to be conserved. Power need not be wasted outputting light to the exit pupil expander 40 that the exit pupil expander 40 subsequently directs away from the user's eye (and consequently is not used by the user 200 to view the virtual display 60).

Embodiments of the invention are also advantageous because the optical apparatus 2 may be made relatively compact, making it suitable for use in a portable electronic device.

Fig. 9 illustrates a flow chart of a method. At block 400, the light expander 30 expands light, input into the light expander 30, in a first, vertical, dimension. At block 410, the light expander 30 provides diverging light (which diverges in the vertical dimension) to the optical device 50. At block 420, the optical device redirects the diverging light, provided by the light expander 30, to produce converging light that converges in the vertical dimension.

The illustration of a particular order to the blocks in Fig. 9 does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed. For example, the exit pupil expander 40 is illustrated in the figures as having two diffraction gratings 41, 43. However, the exit pupil expander 40 may have any number of diffraction gratings. Also, those diffraction gratings may or may not be on different faces 47, 48 of the exit pupil expander 40.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. An optical apparatus (2), comprising:
a display (10);
one or more optical devices (20) configured to collimate at least a portion of divergent light from each pixel on the display (10) into a collimated light beam and configured to output a plurality of diverging light beams;
a light expander (30) comprising an entrance face (33), an end face (34), an upper face (32), a lower face (31) and first and second side faces (35, 36), wherein the upper face (32), lower face (31) and first and second side faces (35, 36) extend between the entrance face (33) and the end face (34) and wherein the lower face (31) and the upper face (32) diverge from one another, in a first dimension, as they extend from the entrance face (33) towards the end face (34);
the light expander (30) configured to expand light, input into the light expander (30) through the entrance face (33) from the one or more optical devices (20),
in the first dimension, and configured to provide diverging light that diverges in the first dimension;
a grooved reflector (50) comprising a plurality of reflective surfaces configured to redirect the diverging light, received from the light expander (30), to produce converging light that converges in the first dimension; and
a further light expander (40), configured to expand the light, converging in the first dimension and received from the grooved reflector, in a second dimension substantially orthogonal to the first dimension, wherein the further light expander (40) is configured to provide an exit pupil for the apparatus (2) and comprises an in-coupling portion configured to receive the converging light from the grooved reflector, and an out-coupling portion configured to output light to a user.

2. An apparatus (2) as claimed in claim 1, wherein the light expander (30) is configured to guide light, input into the light expander (30), prior to providing diverging light to the grooved reflector.

3. An apparatus (2) as claimed in claim 1 or 2, wherein the light expander (30) is configured to expand light, input into the light expander (30), in the first dimension and not in a second dimension, the second dimension being substantially orthogonal to the first dimension.

4. An apparatus (2) as claimed in claim 1, 2 or 3, wherein the grooved reflector (50) is configured to redirect diverging light, received from the light expander (30), to produce converging light that converges in the first dimension and not in a second dimension, the second dimension being substantially orthogonal to the first dimension.

5. An apparatus (2) as claimed in any of the preceding claims, wherein the grooved reflector (50) is configured to redirect the diverging light within a plane substantially orthogonal to the first dimension.

6. An apparatus (2) as claimed in claim 5, wherein adjacent reflecting surfaces of the reflecting system are orthogonal to one another.

7. An apparatus (2) as claimed in any of the preceding claims, wherein the light input into the light expander (30) represents an image displayed on the display.

8. An apparatus (2) as claimed in any of the preceding claims, wherein the light expander (30) is configured to receive diverging light.

9. A portable electronic device comprising an apparatus as claimed in at least one of claims 1 to 8.

10. A method, comprising:
collimating at least a portion of divergent light from each pixel on a display into a collimated beam and outputting a plurality of diverging light beams;
expanding, in a light expander (30), the output light in a first dimension, the light expander (30) comprising an entrance face (33), an end face (34), an upper face (32), a lower face (31) and first and second side faces (35, 36), wherein the upper face (32), lower face (31) and first and second side faces (35, 36) extend between the entrance face (33) and the end face (34) and wherein the lower face (31) and the upper face (32) diverge from one another, in the first dimension, as they extend from the entrance face (33) towards the end face (34);
providing, from the light expander (30), diverging light, that diverges in the first dimension;
redirecting, by a grooved reflector (50) comprising a plurality of reflective surfaces, the diverging light to produce converging light that converges in the first dimension; and
expanding, by a further light expander (40), the converging light in a second dimension, substantially orthogonal to the first dimension, wherein the further light expander (40) provides an exit pupil for the apparatus (2) and comprises an in-coupling portion configured to receive the converging light from the grooved reflector, and an out-coupling portion configured to output light to a user.

11. A method as claimed in claim 10, wherein the light is expanded, by the light expander (30), the first dimension and not in a second dimension, the second dimension being substantially orthogonal to the first dimension.

12. A method as claimed in claim 10 or 11, wherein the diverging light is redirected, by the grooved reflector (50), to produce converging light that converges in the first dimension and not in a second dimension, the second dimension being substantially orthogonal to the first dimension.

## Patentansprüche

1. Optische Vorrichtung (2), umfassend:
eine Anzeige (10),
eines oder mehrere optische Geräte (20), das konfiguriert ist oder die konfiguriert sind, mindestens einen Teil divergierenden Lichts von jedem Pixel auf der Anzeige (10) in einen kollimierten Lichtstrahl zu kollimieren, und das konfiguriert ist oder die konfiguriert sind, mehrere divergierende Lichtstrahlen auszugeben,
einen Lichtexpander (30), der eine Eintrittsfläche (33), eine Endfläche (34), eine Oberseite (32), eine Unterseite (31) und eine erste und eine zweite Seitenfläche (35, 36) aufweist, wobei die Oberseite (32) die Unterseite (31) und die erste und zweite Seitenfläche (35, 36) sich zwischen der Eintrittsfläche (33) und der Endfläche (34) erstrecken und wobei die Unterseite (31) und die Oberseite (32) in einer ersten Dimension voneinander divergieren, insoweit sie sich von der Eintrittsfläche (33) zur Endfläche (34) erstrecken,
wobei der Lichtexpander (30) konfiguriert ist, Licht, das durch die Eintrittsfläche (33) in den Lichtexpander (30) von dem einen oder den mehreren optischen Geräten (20) eingegeben wird, in der ersten Dimension zu expandieren, und konfiguriert ist, divergierendes Licht bereitzustellen, das in der ersten Dimension divergiert,
einen gerillten Reflektor (50), der mehrere reflektierende Oberflächen umfasst, die konfiguriert sind, das vom Lichtexpander (30) empfangene divergierende Licht umzulenken, um konvergierendes Licht zu erzeugen, das in der ersten Dimension konvergiert, und
einen weiteren Lichtexpander (40), der konfiguriert ist, das Licht zu expandieren, das in der ersten Dimension konvergiert und von dem gerillten Reflektor in einer zu der ersten Dimension im Wesentlichen orthogonalen zweiten Dimension empfangen wird, wobei der weitere Lichtexpander (40) konfiguriert ist, eine Austrittspupille für die Vorrichtung (2) bereitzustellen, und einen Einkopplungsabschnitt, der konfiguriert ist, das konvergierende Licht von dem gerillten Reflektor zu empfangen, und einen Auskopplungsabschnitt umfasst, der konfiguriert ist, Licht an einen Benutzer auszugeben.

2. Vorrichtung (2) nach Anspruch 1, wobei der Lichtexpander (30) konfiguriert ist, in den Lichtexpander (30) eingegebenes Licht zu leiten, bevor dem gerillten Reflektor divergierendes Licht bereitgestellt wird.

3. Vorrichtung (2) nach Anspruch 1 oder 2, wobei der Lichtexpander (30) konfiguriert ist, in den Lichtexpander (30) eingegebenes Licht in der ersten Dimension und nicht in einer zweiten Dimension zu expandieren, wobei die zweite Dimension im Wesentlichen orthogonal zu der ersten Dimension ist.

4. Vorrichtung (2) nach Anspruch 1, 2 oder 3, wobei der gerillte Reflektor (50) konfiguriert ist, von dem Lichtexpander (30) empfangenes divergierendes Licht umzulenken, um konvergierendes Licht zu erzeugen, das in der ersten Dimension und nicht in einer zweiten Dimension konvergiert, wobei die zweite Dimension im Wesentlichen orthogonal zur ersten Dimension ist.

5. Vorrichtung (2) nach einem der vorhergehenden Ansprüche, wobei der gerillte Reflektor (50) konfiguriert ist, das divergierende Licht innerhalb einer Ebene umzulenken, die im Wesentlichen orthogonal zu der ersten Dimension ist.

6. Vorrichtung (2) nach Anspruch 5, wobei benachbarte reflektierende Oberflächen des reflektierenden Systems orthogonal zueinander sind.

7. Vorrichtung (2) nach einem der vorhergehenden Ansprüche, wobei das in den Lichtexpander (30) eingegebene Licht ein auf der Anzeige angezeigtes Bild repräsentiert.

8. Vorrichtung (2) nach einem der vorhergehenden Ansprüche, wobei der Lichtexpander (30) konfiguriert ist, divergierendes Licht zu empfangen.

9. Tragbares elektronisches Gerät mit einer Vorrichtung nach einem der Ansprüche 1 bis 8.

10. Verfahren, umfassend:
Kollimieren mindestens eines Teils divergierenden Lichts von jedem Pixel auf einer Anzeige in einen kollimierten Strahl und Ausgeben mehrerer divergierender Lichtstrahlen,
Expandieren des ausgegebenen Lichts in einer ersten Dimension in einem Lichtexpander (30), wobei der Lichtexpander (30) eine Eintrittsfläche (33), eine Endfläche (34), eine Oberseite (32), eine Unterseite (31) und erste und zweite Seitenfläche (35, 36) aufweist, wobei sich die Oberseite (32), die Unterseite (31) und die erste und zweite Seitenfläche (35, 36) zwischen der Eintrittsfläche (33) und der Endfläche erstrecken (34) und wobei die Unterseite (31) und die Oberseite (32) in der ersten Dimension voneinander divergieren, insoweit sie sich von der Eintrittsfläche (33) zur Endfläche (34) erstrecken,
Bereitstellen von divergierendem Licht, das in der ersten Dimension divergiert, von dem Lichtexpander (30),
Umlenken des divergierenden Lichts durch einen gerillten Reflektor (50), der mehrere reflektierende Oberflächen umfasst, um konvergierendes Licht zu erzeugen, das in der ersten Dimension konvergiert, und
Expandieren des konvergierenden Lichts durch einen weiteren Lichtexpander (40) in einer zu der ersten Dimension im Wesentlichen orthogonalen zweiten Dimension, wobei der weitere Lichtexpander (40) eine Austrittspupille für die Vorrichtung (2) bereitstellt und einen Einkopplungsabschnitt, der konfiguriert ist, das konvergierende Licht von dem gerillten Reflektor zu empfangen, und einen Auskopplungsabschnitt umfasst, der konfiguriert ist, Licht an einen Benutzer auszugeben.

11. Verfahren nach Anspruch 10, wobei das Licht durch den Lichtexpander (30) in der ersten Dimension und nicht einer zweiten Dimension expandiert wird, wobei die zweite Dimension im Wesentlichen orthogonal zu der ersten Dimension ist.

12. Verfahren nach Anspruch 10 oder 11, wobei das divergierende Licht durch den gerillten Reflektor (50) umgelenkt wird, um konvergierendes Licht zu erzeugen, das in der ersten Dimension und nicht in einer zweiten Dimension konvergiert, wobei die zweite Dimension im Wesentlichen orthogonal zu der ersten Dimension ist.

## Revendications

1. Appareil optique (2), comprenant :
un affichage (10) ;
un ou plusieurs dispositifs optiques (20) configurés pour collimater au moins une partie de la lumière divergente de chaque pixel sur l'affichage (10) en un faisceau lumineux collimaté et configurés pour produire une pluralité de faisceaux lumineux divergents ;
un expanseur de lumière (30) comprenant une face d'entrée (33), une face d'extrémité (34), une face supérieure (32), une face inférieure (31) et des première et seconde faces latérales (35, 36),
dans lequel la face supérieure (32), la face inférieure (31) et les première et seconde faces latérales (35, 36) s'étendent entre la face d'entrée (33) et la face d'extrémité (34) et
dans lequel la face inférieure (31) et la face supérieure (32) divergent l'une de l'autre, dans une première dimension, lorsqu'elles s'étendent depuis la face d'entrée (33) vers la face d'extrémité (34);
l'expanseur de lumière (30) étant configuré pour étendre la lumière, entrée dans l'expanseur de lumière (30) à travers la face d'entrée (33) à partir desdits un ou plusieurs dispositifs optiques (20), dans la première dimension, et configuré pour fournir une lumière divergente qui diverge dans la première dimension ;
un réflecteur rainuré (50) comprenant une pluralité de surfaces réfléchissantes configurées pour rediriger la lumière divergente, reçue de l'expanseur de lumière (30), pour produire une lumière convergente qui converge dans la première dimension ; et
un autre expanseur de lumière (40), configuré pour étendre la lumière, convergeant dans la première dimension et reçue du réflecteur rainuré, dans une deuxième dimension sensiblement orthogonale à la première dimension, dans lequel l'autre expanseur de lumière (40) est configuré pour fournir une pupille de sortie de l'appareil (2) et comprend une partie de couplage d'entrée configurée pour recevoir la lumière convergente en provenance du réflecteur rainuré, et une partie de couplage de sortie configurée pour émettre de la lumière vers un utilisateur.

2. Appareil (2) selon la revendication 1, dans lequel l'expanseur de lumière (30) est configuré pour guider la lumière, entrée dans l'expanseur de lumière (30), avant de fournir une lumière divergente au réflecteur rainuré.

3. Appareil (2) selon la revendication 1 ou 2, dans lequel l'expanseur de lumière (30) est configuré pour dilater la lumière, entrée dans l'expanseur de lumière (30), dans la première dimension et non dans une seconde dimension, la seconde dimension étant sensiblement orthogonale à la première dimension.

4. Appareil (2) selon la revendication 1, 2 ou 3, dans lequel le réflecteur rainuré (50) est configuré pour rediriger la lumière divergente, reçue de l'expanseur de lumière (30), pour produire une lumière convergente qui converge dans la première dimension et non dans une seconde dimension, la seconde dimension étant sensiblement orthogonale à la première dimension.

5. Appareil (2) selon l'une quelconque des revendications précédentes, dans lequel le réflecteur rainuré (50) est configuré pour rediriger la lumière divergente dans un plan sensiblement orthogonal à la première dimension.

6. Appareil (2) selon la revendication 5, dans lequel les surfaces réfléchissantes adjacentes du système réfléchissant sont orthogonales les unes par rapport aux autres.

7. Appareil (2) selon l'une quelconque des revendications précédentes, dans lequel l'entrée de lumière dans l'expanseur de lumière (30) représente une image affichée sur l'affichage.

8. Appareil (2) selon l'une quelconque des revendications précédentes, dans lequel l'expanseur de lumière (30) est configuré pour recevoir une lumière divergente.

9. Dispositif électronique portable comprenant un appareil selon au moins l'une des revendications 1 à 8.

10. Procédé, comprenant les étapes consistant à :
collimater au moins une partie de la lumière divergente de chaque pixel sur un écran en un faisceau collimaté et produise une pluralité de faisceaux lumineux divergents ;
étendre, dans un expanseur de lumière (30), la lumière produite dans une première dimension, l'expanseur de lumière (30) comprenant une face d'entrée (33), une face d'extrémité (34), une face supérieure (32), une face inférieure (31) et des première et seconde faces latérales (35, 36), dans lequel la face supérieure (32), la face inférieure (31) et les première et seconde faces latérales (35, 36) s'étendent entre la face d'entrée (33) et la face d'extrémité (34) et
dans lequel la face inférieure (31) et la face supérieure (32) divergent l'une de l'autre, dans la première dimension, lorsqu'elles s'étendent depuis la face d'entrée (33) vers la face d'extrémité (34);
fournir, à partir de l'expanseur de lumière (30), une lumière divergente, qui diverge dans la première dimension ;
rediriger, au moyen d'un réflecteur rainuré (50) comprenant une pluralité de surfaces réfléchissantes, la lumière divergente pour produire une lumière convergente qui converge dans la première dimension ; et
étendre, au moyen d'un autre expanseur de lumière (40), la lumière convergente dans une deuxième dimension, sensiblement orthogonale à la première dimension, dans laquelle l'autre expanseur de lumière (40) fournit une pupille de sortie pour l'appareil (2) et comprend une partie de couplage d'entrée configurée pour recevoir la lumière convergente en provenance du réflecteur rainuré, et une partie de couplage de sortie configurée pour émettre de la lumière vers un utilisateur.

11. Procédé selon la revendication 10, dans lequel la lumière est étendue au moyen de l'expanseur de lumière (30), dans la première dimension et non dans une seconde dimension, la seconde dimension étant sensiblement orthogonale à la première dimension.

12. Procédé selon la revendication 10 ou 11, dans lequel la lumière divergente est redirigée par le réflecteur rainuré (50) pour produire une lumière convergente qui converge dans la première dimension et non dans une seconde dimension, la seconde dimension étant sensiblement orthogonale à la première dimension.
